# EUROPÄISCHE PATENTANMELDUNG

(11) **EP 0 849 519 A1**
(43) Veröffentlichungstag der Anmeldung: **24.06.1998**
(21) Anmeldenummer: 96120466.6
(22) Anmeldetag: 19.12.1996
(51) Int. Cl.: F16L 33/02, H01R 4/64

(54) **Befestigungselement zum Fixieren von flexiblen Schutzschläuchen**

(71) Anmelder: Daimler-Benz Aerospace Airbus Gesellschaft mit beschränkter Haftung, 21129 Hamburg (DE)
(72) Erfinder: Kirma, Safa, 22280 Wedel/Holstein (DE)
(74) Vertreter: Hansmann, Dierk, Dipl.-Ing.

(57) **Zusammenfassung**

Die Erfindung bezieht sich auf ein Befestigungselement zum Fixieren von flexiblen Schutzschläuchen mit flexiblem Durchmesser an einem Anschlußelement im Flugzeug.

Das Befestigungselement erzeugt eine Vorspannkraft, die es auf den Schutzschlauch überträgt. Mit dem Befestigungselement wird der Schutzschlauch mit geringstem Übergangswiderstand am Anschlußelement zuverlässig sowie vibrations- und schockbeständig fixiert. Es handelt sich dabei um eine dauerhafte mechanische Verbindung, die den Ansprüchen an Blitzschutz-Schlauchverbindungen im Flugzeugbau genügt.

Das Befestigungselement besteht aus einem federnden Element (1), welches durch radialen Druck eine Vorspannkraft zur Fixierung des Schutzschlauches erzeugt und auf diesen überträgt. Das federnde Element (1) stellt eine geöffnete Klemmhülse (1.1) oder einen gewickelten Rollfederring (1.2) dar. An der Öffnung (2,2a) der betreffenden Klemmhülse (1.1) befinden sich unterschiedlich gestaltete Erhebungen (7.1,7.2). Der Rollfederring (1.2) ist an den freien Enden (2.3,2.4) des ringförmig gewickelten Federbandes (1.2a) mit je einem Durchgangsloch (2a) versehen und kann oberhalb der Löcher (2a) mit einer Erhebung (7.1,7.2) versehen sein. Mit einem in die Öffnung (2a) eingeführten geeigneten Werkzeug (5.2) läßt sich das jeweilige federnde Element durch Spreizung seiner freien Enden (2.3,2.4) vorspannen, wobei sich die erzeugte Vorspannkraft mit radialer Druckausübung radial auf den Schutzschlauch, der sachgemäß einem Anschlußelement aufliegt, übertragen läßt.

## Beschreibung

Die Erfindung bezieht sich auf ein Befestigungselement zum Fixieren von flexiblen Schutzschläuchen mit flexiblem Durchmesser an einem Anschlußelement im Flugzeug. Das Befestigungselement erzeugt eine Vorspannkraft, die es auf den Schutzschlauch überträgt. Dadurch wird der Schutzschlauch mit geringstem Übergangswiderstand am Anschlußelement befestigt. Mit dem Befestigungselement wird der Schutzschlauch am Anschlußelement zuverlässig sowie vibrations- und schockbeständig fixiert. Es handelt sich dabei um eine dauerhafte mechanische Verbindung, die den Ansprüchen an Blitzschutz-Schlauchverbindungen im Flugzeugbau genügt.

Anschlüsse und Verbindungen von (in den Blitzschutzpotentialausgleich einbezogenen) Schutzschläuchen oder Schutzschlauchsystemen sind im Flugzeug so auszuführen, daß sie allgemein den verschiedenartig einwirkenden Beanspruchungen standhalten. Im Flugzeugbau sind Verlegetechnologien bekannt, wonach bekannte elektrische Leitungsführungen an elektrische und / oder mechanische Komponenten in Schutzschläuchen geführt sind.

Es ist bekannt, daß metallene Schutzschläuche als Schutzschlauchgeflecht mit einem Spannschloß mittels Spannband an der Komponente befestigt sind, wobei die Schutzschläuche mit in den internen Blitzschutzpotentialausgleich des Flugzeuges einbezogen werden. Dieser Verbindungsart haftet der Nachteil an, daß durch diese Befestigungsart die einzelnen Litzen des Schlauchgeflechtes durch den auf sie mechanisch ausgeübten Druck beschädigt werden können, was leider erst nach Lösung der Befestigung sichtbar wird. Dadurch mindert sich auch der Gesamtquerschnitt des Schutzschlauchgeflechtes, der wiederum den zur Verfügung stehenden wirksamen Querschnitt zur Ableitung des Blitzstromes im Ernstfall beeinträchtigt.

Weiterhin ist bekannt, daß metallene Schutzschläuche als Schutzschlauchgeflecht mittels Crimphülse durch Crimpung an der Komponente befestigt werden, wobei die Schutzschläuche mit in den internen Blitzschutzpotentialausgleich des Flugzeuges einbezogen werden.

Dieser Verbindungsart haftet der Nachteil an, daß die Befestigung des Schutzschlauchgeflechtes an der Komponente mechanisch nicht gelöst werden kann. Bei dieser Verbindungsart wird der Crimpdruck hydraulisch erzeugt, wobei sich die Crimphülse infolge des hohen Druckes so verformt, daß die einem Aluminium-Stützkörper aufliegenden Kupfer-Litzen zu fließen beginnen. Weiterhin treten infolge der übertragenen Druckwirkung im Innenbereich des Stützkörpers in der (dem) ihm unterliegenden Kunststoffbeschichtung (Scheuerschutz für die installierten elektrischen Leitungen) Rißbildungen auf. Durch das Fließen des Kupfers der Litzen wird der Gesamtquerschnitt des Kupfer-Schlauchgeflechtes, welches dem Stützkörper aufliegt, beeinträchtigt, weil das Fließen zum Abbruch einiger Litzen führen kann. Die Befestigung geschieht mit höherem Aufwand, da zur Crimpung der Hülse ein separates Werkzeug benötigt wird. Entspricht die Befestigung der Hülse an Komponenten nicht dem Qualitätsmaßstab für gecrimmte Blitzschutz-Schlauchverbindungen, dann kann diese qualitätsgeminderte Verbindung im Flugzeugbau nicht eingesetzt werden. Die Befestigung derartiger Schlauchverbindungen geschieht durch stationäre Bearbeitung (Montagevorfertigung). Eine ortsunabhängige Bearbeitung der zu realisierenden Verbindung ist nicht oder nur beschwerlich möglich.

Außerdem ist bekannt, daß die Schutzschläuche auch durch manuelles Aufwickeln von Band an der Komponente befestigt werden. Ungeachtet des erheblichen Aufwandes, der mit dem vorangestellten Aufrollen des Bandes, seinem Anlegen mit der Hand an der Befestigungsstelle und seinem straffen Aufwickeln an der Komponente auf den Schutzschlauch zu betreiben wäre und eine umständlich Handhabung darstellt, wird der Schutzschlauch nicht mit definierter Anpreßkraft befestigt. Diese Art der Befestigung kann nicht den erforderlichen Übergangswiderstandsanteil zwischen dem Schutzschlauch und der Komponente erzielen, der bei in den Blitzschutzpotentialausgleich einbezogenen Schlauchverbindungen im Flugzeugbau erwünscht ist.

Eine weiteren Lösung offenbart die Befestigung des Schutzschlauches an der Komponente durch Bandbewicklung mittel einem Werkzeug, bei dem sich die Vorstellkraft einstellen läßt. Die individuelle Einstellung der Vorstellkraft birgt die Gefahr einer nicht qualitätsgerecht ausgeführten Verbindung zwischen den Elementen, da infolge einer geminderten oder überhöhten Anpreßkraft des Bandes sich zwischen dem Schutzschlauch und der Komponente an deren Auflagefläche unterschiedliche Wirkungen eintreten. Die Ausführung der Befestigung des Schutzschlauches mit variabler Anpreßkraft, - bedingt durch die verschiedenen Typen und Größen der Anschlußelemente mit verschiedenem Anschlußdurchmesser - , kann zu einer Verwechselung des einzustellenden pneumatischen oder mechanischen Befestigungsdruckes führen.

Eine ausreichende Befestigungssicherheit des Schutzschlauches an der Komponente wird erst bei Bewicklung der Anordnung mit zwei Bandlagen erreicht. Es handelt sich um eine sehr umständliche Verbindungstechnologie, bei der die gemeinsame Handhabung der Elemente mit dem Werkzeug sich eher beschwerlich darstellt.

Demzufolge liegt der Erfindung die Aufgabe zugrunde, ein gattungsgemäßes Befestigungselement zum Fixieren von flexiblen Schutzschläuchen mit flexiblem Durchmesser derart zu gestalten, daß mit ihm ohne bedeutenden Aufwand die zuverlässige Befestigung eines am Anschlußelement mit vorbestimmtem Anpreßdruck sachgemäß aufliegenden Schutzschlauches bei Erzielung niedriger Übergangswiderstände erfolgt, wobei es eine dauer- sowie vibrations- und schockbeständige Befestigung bewirkt. Durch die Montage des Befestigungselementes darf der übertragene Anpreßdruck keine Teile des Anschlußelementes beschädigen und der Schutzschlauch keinen Schaden nehmen, der seinen Querschnitt mindert. Das Befestigungselement soll sich einfach montieren und wiederverwenden lassen, so daß sich mit ihm auch die Erneuerung bzw. Um-oder Nachrüstung vorhandener Schlauchbefestigungsmittel im Flugzeug problemlos bewältigen läßt.

Diese Aufgabe wird durch die kennzeichnenden Merkmale der Ansprüche 1, 7 und 12 gelöst. In den weiteren Unteransprüchen sind zweckmäßige Ausgestaltungen dieser Maßnahmen genannt.

Die Erfindung ist in drei Ausführungsbeispielen anhand der Zeichnungen näher beschrieben.

Es zeigen in einem ersten Ausführungsbeispiel:
- Fig.1: eine Klemmhülse in Querschnittsdarstellung mit veränderlicher Wandstärke und einem Gewindeloch für eine Kreuzschraube;
- Fig.1a: die Draufsicht der Klemmhülse nach Fig.1;
- Fig.1b: die Darstellung der Kreuzschraube.

In einem zweiten Ausführungsbeispiel wird nach
- Fig.2: ein Rollfederring in Querschnittsdarstellung mit zwei Durchgangslöchern der aus zwei ringförmig gewickelten Lagen aus Federband, besteht;
- Fig.2a: die Draufsicht des Rollfederringes nach Fig.2;
- Fig.2b: eine Zange zur Spreizung der freien Enden des Federbandes;
- Fig.2c: die Zange mit abgewinkelten Spitzen
dargestellt.

In einem dritten Ausführungsbeispiel wird nach
- Fig.3: eine Klemmhülse in Querschnittsdarstellung mit gleichbleibender Wandstärke und an der Öffnung aufgesetzter Erhebung zur Aufnahme eines Werkzeuges mit einem Kreuzgriff;
- Fig.3a: die Draufsicht der Klemmhülse nach Fig.3;
- Fig.3b: die Darstellung des Werkzeuges mit einem Kreuzgriff;
- Fig.3c: die Draufsicht des Formteiles nach Fig.3;
- Fig.3d: die Darstellung der mittig angeordneten Sicke mit veränderlicher Tiefe auf dem Profil der Klemmhülse;
- Fig.3e: die Darstellung nach der Fig.3d im Schnitt A - B mit Ausbildung der Sicke
beschrieben.

In einem Flugzeug werden elektrische Leitungen (Hilfs- und Steuerleitungen) häufig in metallenen Schutzschläuchen verlegt, um sie gegen elektromagnetische Störungen, insbesondere Überspannungen und Blitzeinwirkungen, zu schützen. Dafür werden Ummantelungen aus Kupfergeflecht eingesetzt, die in den Blitzschutzpotentialausgleich der elektrotechnischen Anlagen und Geräte an Bord eines Flugzeuges einbezogen sind. Weiterhin schirmt das Kupfergeflecht wirksam gegen elektromagnetische Einflüsse der parallel verlegten elektrischen Bordsysteme ab. Damit die elektrischen Leitungen zuverlässig in das Blitzschutz- und Abschirmsystem einbezogen werden, sind die Schutzschläuche an den mit der Flugzeugstruktur verbundenen Verbindungsstellen (Ableitpunkten mit Massepotential) im Verbinder- oder Endbereich durch geeignete Befestigungsmittel zu fixieren. Diese Befestigungsmittel sollen an den vorgesehenen Anschlußteilen (der elektrischen und / oder mechanischen Komponenten) - beispielsweise mit dem Kupfergeflecht - zuverlässige, vibrations- und schockbeständige Verbindungen realisieren. Das Befestigungsmittel hat dabei an Auflagestelle nicht nur einen niedrigen Übergangswiderstandanteil erzielen; Gleichrangig soll es eine dauerhafte, aber leicht lösbare mechanische Verbindung, die keinen Schaden oder Bruch der Litzen am eingesetzten Kupfergeflecht verursacht, eingehen. Die eingesetzten Befestigungsmittel haben außerdem die Anforderungen an: einfache Handhabung, Wiederverwendbarkeit, geringer Verarbeitungsaufwand mit stromunabhängigen (Hand-) Werkzeugen, Vermeidung des Fließens der Kupfer-Litzen und von Rißentstehung im Innenbereich des Stützkörpers (Scheuerschutz für installierte elektrische Leitungen).

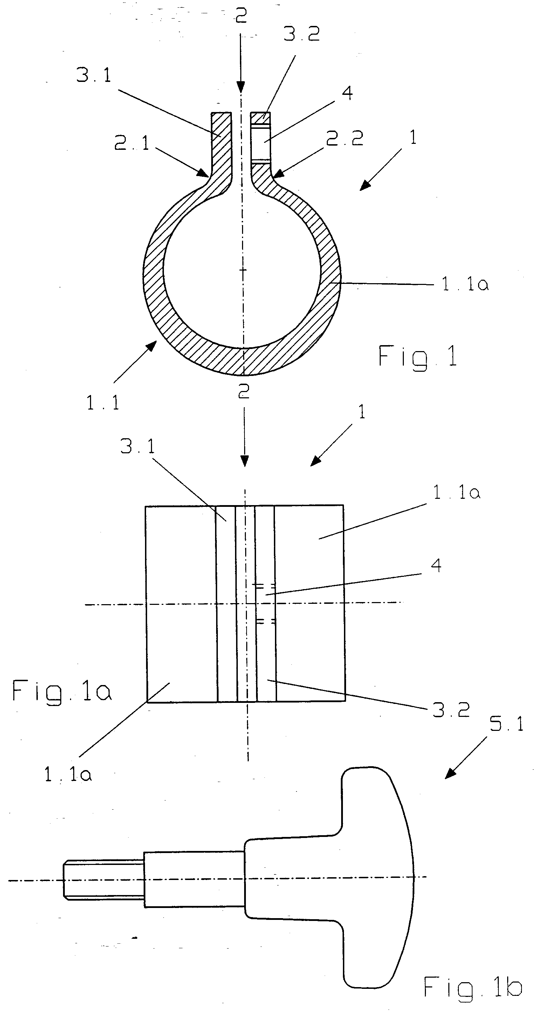

Die in den Figuren 1 bis 3 dargestellten Befestigungselemente werden zum Fixieren von flexiblen Schutzschläuchen, die ihren Durchmesser flexibel verändern, an Anschluß-und Verbindungselementen im Flugzeug eingesetzt. Sie bestehen grundsätzlich aus einem federnden Element 1, das durch radial wirkenden Druck eine Vorspannkraft erzeugt und auf einen sachgemäß installierten (der Auflagefläche des Anschluß- und Verbindungselementes sachgemäß aufliegenden) Schutzschlauch überträgt.

Im Flugzeugbau wird als Schutzschlauch häufig Kupfergeflecht benutzt, das aufgrund seiner mechanischen und elektrischen Eigenschaften sich gut zur flexiblen Verlegung (Installation) und Masseanbindung an das Blitzschutz- und Abschirmsystem eines Flugzeuges eignet.

In einem ersten Ausführungsbeispiel wird das Befestigungselement zum Fixieren flexibler Schutzschläuche näher beschrieben. Das in der Fig.1 dargestellte Befestigungselement wird durch ein federndes Element 1 verkörpert. Es besteht aus einer Klemm hülse 1.1, die ein ringförmiges geformtes Profil 1.1a mit veränderlicher Wandstärke besitzt. Das Profil 1.1a, welches sich so als Ring darstellt, weist einen veränderlichen rechteckigen Querschnitt auf und ist an einer Stelle geöffnet (gesprengt). An den beiden freien Enden 2.1, 2.2 des Profiles 1.1a, deren Abstand eine Öffnung 2 des Profiles 1.1a darstellt, ist jeweils ein Flansch 3.1 bzw. 3.2 angeformt. Die Stirnflächen der Flansche 3.1, 3.2 stehen sich parallel gegenüber. Einer der beiden Flansche 3.1 oder 3.2 besitzt ein Aufnahmeloch 4, das mit einem Innengewinde versehen ist. In diese Gewindeloch wird ein schraubbares Werkzeug 5.1 aufgenommen. Das ringförmige Profiles 1.1a befindet sich im entspannten Zustand. Sein größter Querschnitt befindet sich (vor allem) an der Stelle, wo infolge Beanspruchung das größte Biegemoment auftritt. Diese Stelle befindet sich dem unterhalb der Öffnung 2 gegenüberliegenden Bereich. Durch diese besondere Formgebung des Profiles 1.1a erhält man eine Klemmhülsenquerschnitt mit gleicher Biegefestigkeit. Sofern das vorgenannte Werkzeug 5.1, das beispielgemäß als Kreuzgriffschraube ausgeführt ist, mit dem Gewindeloch verschraubt wird, drückt das Gewindeende der Kreuzgriffschraube auf die Stirnfläche des gegenüberliegenden Flansches 3.1 bzw. 3.2 und spreizt somit die beiden Flansche 3.1, 3.2 zueinander. Die so mittels der Kreuzgriffschraube gespreizte Klemmhülse 1.1 wird sich dadurch gleichmäßig rund verformen.
Die sachgemäße Montage der Klemmhülse 1.1 auf das beispielgemäße Kupfergeflecht, welches der Auflagefläche des vorgenannten Anschluß- und Verbindungselementes, beispielsweise einem Endgehäuse oder einem Verbinder, im vormontierten Zustand aufliegt, kann erst nach deren Spreizung erfolgen. Die Kreuzgriffschraube wird dabei (nach der vorbeschriebenen Art und Weise) im Gewindeloch mit ihrem Gewindeende bis zum Anschlag eingedreht. Durch die sich einstellende Spreizung der beiden Flansche 3.1, 3.2 besteht die Möglichkeit der sachgemäßen Positionierung der Klemmhülse 1.1 auf dem Kupfergeflecht.

Durch die Spreizung vergrößert sich der (Ring-) Durchmesser der Klemmhülse 1.1 kreisförmig, wodurch letztere vorgespannt wird.
Die Befestigung des Kupfergeflechtes geschieht dann mit radialer Druckausübung durch Übertragung der erzeugten Vorspannkraft auf die erwähnte Auflagefläche der Klemmhülse 1.1.

Vorteilhafterweise kann die Stirnfläche des betreffenden Flansches 3.1 bzw. 3.2, der mit dem Gewindeloch versehen ist, als Masseanschluß an einen Masseverbinder zur Anbindung an das interne Blitzschutzsystem (die metallene Struktur) des Flugzeuges ausgebildet werden.

Die Fig.1a zeigt die Draufsicht der Klemmhülse 1.1 nach Fig.1. Aus ihr kann man deutlich die Breite des Profiles 1.1a entnehmen, das ringförmig geformt die Klemmhülse 1.1 nach der Fig.1 ergibt.

In der Fig.1b wird ergänzend die zitierte Kreuzgriffschraube, die beispielgemäß als schraubbares Werkzeug 5.1 eingesetzt wird, dargestellt.

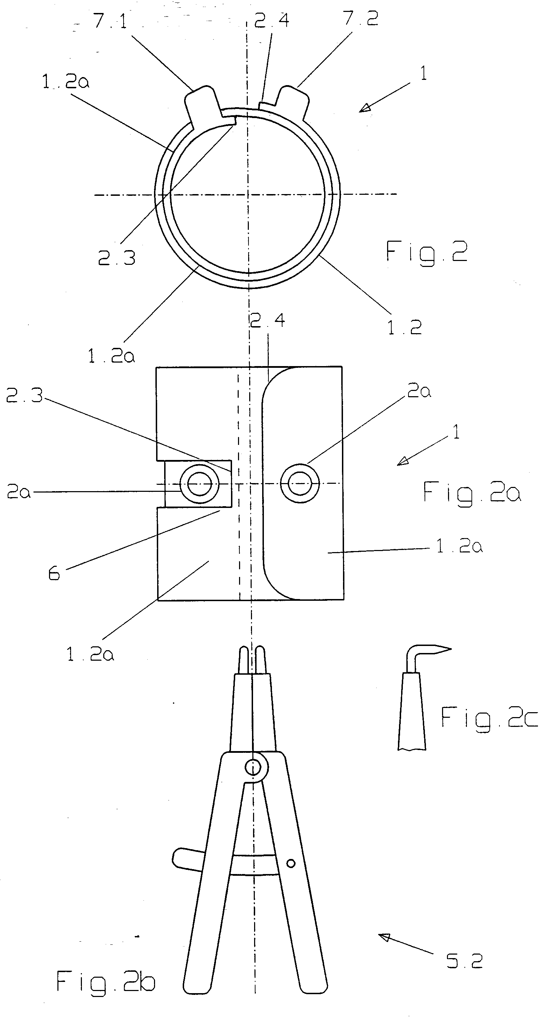

In einem zweiten Ausführungsbeispiel erfolgt die Beschreibung eines weiteren Befestigungselementes, welches in der Fig.2 dargestellt ist. Es wird durch ein federndes Element 1 verkörpert, welches aus einem Rollfederring 1.2 besteht, der sich aus einem ringförmig gewickelten Federband 1.2a zusammensetzt. Der Rollfederring 1.2 muß mindestens zwei Windungen aufweisen. Nahe der beiden freien Enden 2.3, 2.4 befinden sich mittig der Breite des festgewickelten Federbandes 1.2a je eine Öffnung 2a, die man als Durchgangsloch ausgebildet. Über dem eingerollten freien Ende 2.3 liegt ein Fenster 6, das beispielgemäß eine rechteckige Gestalt aufweist. Das Fenster 6 ist allen aufliegenden Windungen identisch ausgenommen, so daß das dem eingerollten Ende 2.3 zugeordnete Durchgangsloch freie Zugänglichkeit zum Werkzeug besitzt. Das andere freie Ende 2.4 des Rollfederringes 1.2 liegt allen Windungen des Rollfederringes 1.2 oberhalb auf. Da die vorgenannten Durchgangslöcher einen genügende Tiefe aufweisen, läßt sich der Rollfederring 1.2 durch Spreizung der beiden freien Enden 2.3, 2.4 vorspannen.
Dabei wird die in der Fig.2b dargestellte Zange mit nach Fig.2c abgewinkeltem Spitzen als dafür geeignetes Werkzeug 5.2 zur Spreizung der freien Enden 2.3, 2.4 des Federbandes 1.2a benutzt. Durch die Spreizung der beiden freien Enden 2.3, 2.4 vergrößert sich der (ringförmige) Durchmesser des Rollfederringes 1.2, wodurch die Vorspannung des Rollfederringes 1.2 eingestellt wird. Sofern das Federband 1.2a eine geringe Wandstärke aufweist, werden den (nahe der freien Enden 2.3, 2.4 angeordneten) Durchgangslöchern jeweils geeignete Erhebungen 7.1, 7.2 fest aufgesetzt, um der betreffenden Spitze der Zange nach Fig.2.c genügend Einstecktiefe zu gewähren. Nach Abschluß des Spreizvorganges und der Entnahme der Spitzen aus den Durchgangslöchern bzw. Erhebungen wird die vorbestimmte Vorspannkraft durch radialen Druck auf das - der Auflagefläche des vorgenannten Anschluß- und Verbindungselementes - beispielgemäß vormontierte Kupfergeflecht (als Schutzschlauch) übertragen. Das Federband 1.2a besitzt bei diesem Vorgang das Bestreben, sich wieder retour einzurollen, wobei dann seine gespeicherte Feder(rückstell)kraft (Vorspannkraft) radial der Auflagefläche wirkt.

Die Fig.2a zeigt die Draufsicht des Rollfederringes 1.2 nach Fig.2. Aus ihr kann man deutlich die Breite des Profiles 2.1a entnehmen, das ringförmig gewickelt den Rollfederring 1.2 nach der Fig.2 ergibt.

In der Fig.2b wird die zur Spreizung des Rollfederringes 1.2 benötigte Zange dargestellt, deren Spitzenform man beispielsweise aus der Fig.2c entnehmen kann.

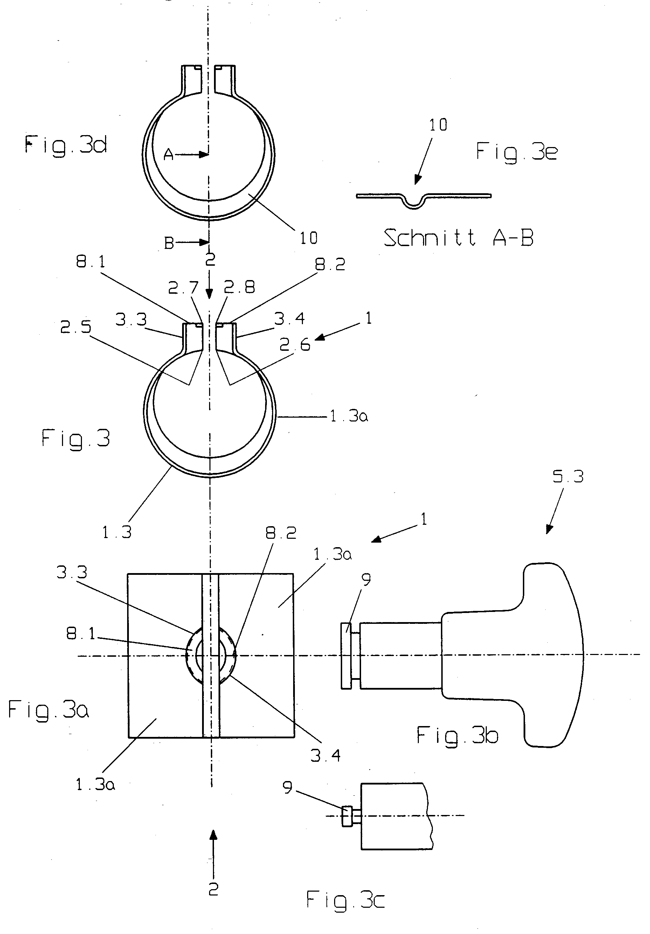

In einem dritten Ausführungsbeispiel erfolgt die Beschreibung eines letzten Befestigungselementes, welches in der Fig.3 dargestellt ist. Es wird durch ein federndes Element 1 verkörpert, welches aus einer Klemmhülse 1.3 besteht, die ein ringförmiges geformtes Profil 1.3a besitzt. Das Profil 1.3a, welches sich so als Ring darstellt, weist - im Unterschied der Klemmhülse 1.1 nach Fig.1 - einen gleichbleibenden rechteckigen Querschnitt auf und ist an einer Stelle geöffnet (gesprengt).

Auf dem ringförmigen Profil 1.3a ist an den freien Enden 2.5, 2.6 eine Werkzeugaufnahme angeformt. Dabei sitzt jeweils im definierten Abstand zur Öffnung 2 des ringförmigen Profil 1.3a lotrecht der freien Enden 2.5, 2.6 eine bogenförmige Wandung 3.3, 3.4, mit der rechtwinklig ein bogenförmiges Dachelement 8.1, 8.2 einstückig ausgebildet ist. Die freien Enden 2.7, 2.8 der beiden Dachsegmente 8.1, 8.2 stehen sich stirnseitig gegenüber. Die Öffnung 2 ergibt sich jeweils aus dem Abstand der freien Enden 2.5, 2.6 des ringförmigen Profiles 1.3a bzw. aus dem Abstand der freien Enden 2.7, 2.8 der Dachsegmente 8.1, 8.2.

Die der Öffnung 2 der Klemmhülse 1.3 mittig angesetzten Elemente (bogenförmige Wandung 3.3, 3.4 mit rechtwinklig angesetztem Dachsegment 8.1, 8.2) werden nachfolgend als Erhebung bezeichnet. Durch die angesetzten Erhebungen ist es möglich, das Werkzeug 5.3 nach Fig.3b mit seinem am Ende ausgebildeten Formteil 9 in die bogenförmig gestaltete Öffnung 2 einzuführen. Das Formteil 9 wird dabei mit definierter Tiefe der Öffnung 2 unterführt. Durch das Drehen des Werkzeuges 5.3 drückt das Formteil 9 gegen die bogenförmigen Wandungen 3.3, 3.4, wodurch die freien Enden 2.5, 2.6 des ringförmigen Profiles 1.3a gespreizt werden und somit die Klemmhülse 1.3 vorgespannt wird. Umfänglich dem ringförmigen Profil 1.3a können eine oder mehrere Sicken 10 mit einheitlichen oder veränderlichen Tiefen eingelassen sein. Die zusätzliche Einbringung der Sicken 10 geschieht deshalb, um das Widerstandsmoment zu erhöhen. Da das Profil 1.3a umfänglich mindestens eine Sicke 10 besitzt, deren Tiefe veränderlich ist, um gleiche Biegefestigkeit zu erzielen, und die gegenüber dem unterhalb der Öffnung 2 befindlichen Bereich des Profiles 1.3a liegt, soll diese Sicke 10 eine maximale Tiefe aufweisen, weil das Profil 1.3a an dieser Stelle - infolge der vorgenannten Spreizung - mit dem größten Biegemoment beansprucht wird.

Die sachgemäße Montage der Klemmhülse 1.3 auf das beispielgemäße Kupfergeflecht, welches der Auflagefläche des vorgenannten Anschluß- und Verbindungselementes, beispielsweise einem Endgehäuse oder einem Verbinder, im vormontierten Zustand aufliegt, geschieht erst nach der vorbeschriebenen Spreizung der angesetzten Erhebungen innerhalb der Öffnung 2. Durch die Spreizung der beiden Flansche 3.3, 3.4 bzw. der freien Enden 2.5, 2.6 des ringförmigen Profiles 1.3a besteht die Möglichkeit, die Klemmhülse 1.3 auf dem Kupfergeflecht sachgemäß zu positionieren. Infolge der Spreizung vergrößert sich der (Ring-) Durchmesser der Klemmhülse 1.3 annähernd kreisförmig, wodurch letztere vorgespannt wird.
Die Befestigung des Kupfergeflechtes geschieht dann mit radialer Druckausübung durch Übertragung der erzeugten Vorspannkraft auf die erwähnte Auflagefläche der Klemmhülse 1.3.

Die Fig.3a zeigt die Draufsicht der Klemmhülse 1.3 nach Fig.3. Aus ihr kann man deutlich die Breite des Profiles 1.3a und die Werkzeugaufnahme nach Fig.3 entnehmen. Deutlich erkennbar ist auch die bogenförmige Gestaltung der Dachsegmente 8.1, 8.2.

In der Fig.3b wird ergänzend die Darstellung eines Werkzeuges 5.3 mit einem Kreuzgriff und angesetztem Formteil 9 gezeigt.

Das Formteil 9 wird in Fig.3c in Draufsicht dargestellt.

In der Fig.3d ist die mittig angeordnete Sicke 10 mit veränderliche Tiefe dargestellt.

Die Fig. 3e zeigt die Fig 3d im Schnitt A - B mit Ausbildung der Sicke 10.

Vorteilhaft wäre bei allen Lösungen (der drei Ausführungsbeispiele), wenn das Kupfergeflecht und die Elemente: Klemmhülse 1.1 bzw. 1.3, Rollfederring 1.2 in einer Nut, die beispielsweise in die Auflagefläche eines Endgehäuses oder eines Verbinders eingearbeitet ist, eingelassen wäre.

### Bezugszeichen

- 1: federndes Element
- 1.1: Klemmhülse
- 1.1a: Profil, ringförmig
- 1.2: Rollfederring
- 1.2a: Federband, ringförmig gewickelt
- 1.3: Klemmhülse
- 1.3a: Profil, ringförmig
- 2, 2a: Öffnung
- 2.1, 2.2: freies Ende
- 2.3, 2.4: freies Ende
- 2.5, 2.6: freies Ende
- 2.7, 2.8: freies Ende
- 3.1, 3.2: Flansch
- 3.3, 3.4: Wandung, bogenförmig
- 4: Aufnahmegewindeloch
- 5.1, 5.2, 5.3: Werkzeug
- 6: Fenster
- 7.1, 7.2: Erhebung
- 8.1, 8.2: Dachsegment, bogenförmig
- 9: Formteil
- 10: Sicke

## Patentansprüche

1. Befestigungselement zum Fixieren von flexiblen Schutzschläuchen mit flexiblem Durchmesser an einem Anschlußelement, das sich aus einem federnden Element zusammensetzt, welches durch radialen Druck eine Vorspannkraft zur Fixierung des Schutzschlauches erzeugt und auf diesen überträgt,
**dadurch gekennzeichnet**, daß
- das federnde Element (1) aus einer Klemmhülse (1.1) besteht, dessen vorgespanntes ringförmiges Profil (1.1a) einen rechteckigen Querschnitt und eine Öffnung (2) aufweist.
- an jedem freien Ende (2.1, 2.2) des Profiles ein Flansch (3.1, 3.2) angeformt ist, die parallel zueinander liegen, welche zur Vorspannung des federnden Elementes (1) durch Spreizung der freien Enden (2.1, 2.2) vorgesehen ist,
- einer der beiden Flansche (3.1, 3.2) ein Aufnahmeloch (4) besitzt, wobei an dieser Stelle in den betreffenden Flansch (3.1, 3.2) ein Innengewinde eingearbeitet ist.

2. Befestigungselement nach Anspruch 1, **dadurch gekennzeichnet**, daß das ringförmige Profil (1.1a) der Klemmhülse (1.1) einen veränderlichen Querschnitt aufweist, und daß der größere Querschnitt des ringförmigen Profiles (1.1a) dem unterhalb der Öffnung (2) gegenüber liegenden Bereich, der infolge der Spreizung mit dem größten Biegemoment beansprucht wird, zugeordnet ist.

3. Befestigungselement nach Anspruch 1, **dadurch gekennzeichnet**, daß das ringförmige Profil (1.1a) durch seinen veränderlichen rechteckigen Querschnitt eine gleichbleibende Biegefestigkeit aufweist, welches sich im vorgespannten Zustand gleichmäßig rund verformt.

4. Befestigungselement nach Anspruch 1, **dadurch gekennzeichnet**, daß das Innengewinde des Aufnahmeloches (4) mit einem Werkzeug (5.1) verschraubbar ist, wodurch sich bei Schraubung des Werkzeuges (5.1) die beiden Flansche (3.1, 3.2) zueinander spreizen.

5. Befestigungselement nach Anspruch 4, **dadurch gekennzeichnet**, daß das Werkzeug (5.1) eine Druckschraube ist, die als Kreuzschraube ausgeführt mit ihrem Gewindeende auf den gegenüberbefindlichen Flansch (3.1, 3.2) drückt.

6. Befestigungselement nach Anspruch 1, **dadurch gekennzeichnet**, daß die Stirnfläche des betreffenden Flansch (3.1, 3.2), der ein Aufnahmeloch (4) mit Innengewinde aufweist, als Masseanschluß ausgebildet ist, der sich mit einem Masseverbinder verbinden läßt.

7. Befestigungselement zum Fixieren von flexiblen Schutzschläuchen mit flexiblem Durchmesser an einem Anschlußelement, das sich aus einem federnden Element zusammensetzt, welches durch radialen Druck eine Vorspannkraft zur Fixierung des Schutzschlauches erzeugt und auf diesen überträgt,
**dadurch gekennzeichnet**, daß
- das federnde Element (1) aus einem Rollfederring (1.2) besteht, der sich aus einem ringförmig gewickelten Federband (1.2a) zusammensetzt, welches mehr als eine Windung aufweist,
- das nahe der beiden freien Enden (2.3, 2.4) mittig der Breite des Federbandes (1.2a) je eine Öffnung (2a), die als Durchgangsloch ausgebildet ist, liegt,
- über dem eingerollten freien Ende (2.3) des Rollfederringes (1.2) ein Fenster (6) liegt, das allen aufliegenden Windungen identisch ausgenommen ist,
- das das andere freie Ende (2.4) des Rollfederringes (1.2) oberhalb aller Windungen sichtbar aufliegt,
- sich die freien Enden (2.3, 2.4) des Rollfederringes (1.2) mittels Einführung eines geeigneten Werkzeuges (5.2) in die betreffende Öffnung (2a) durch Spreizung vorspannen lassen.

8. Befestigungselement nach Anspruch 7, **dadurch gekennzeichnet**, daß der Öffnung (2a) des betreffenden freien Endes (2.3, 2.4) des Federbandes (1.2a) je eine Erhebung (7.1, 7.2) aufgesetzt ist.

9. Befestigungselement nach Anspruch 7, **dadurch gekennzeichnet**, daß die beiden Öffnungen (2a) eine definierte Tiefe aufweisen, die die Einführung des Werkzeuges (5.2) mit genügender Einstecktiefe erlauben.

10. Befestigungselementnach Anspruch 7, **dadurch gekennzeichnet**, daß sich durch die Spreizung der beiden freien Enden (2.3, 2.4) des Federbandes (1.2a) der ringförmige Durchmesser des Rollfederringes (1.2) vergrößert und sich eine Vorspannung des Rollfederringes (1.2) einstellt.

11. Befestigungselement nach Anspruch 7, **dadurch gekennzeichnet**, daß nach Beendigung der Spreizung der beiden freien Enden (2.3, 2.4) des Federbandes (1.2a) und Entnahme des Werkzeuges (5.2) aus den beiden Öffnungen (2a) des Rollfederringes (1.2) die vorbestimmte Vorspannung auf den Schutzschlauch überträgt und das fest gewickelte Federband (1.2a) das Bestreben besitzt, sich einzurollen.

12. Befestigungselement zum Fixieren von flexiblen Schutzschläuchen mit flexiblem Durchmesser an einem Anschlußelement, das sich aus einem federnden Element zusammensetzt, welches durch radialen Druck eine Vorspannkraft zur Fixierung des Schutzschlauches erzeugt und auf diesen überträgt,
**dadurch gekennzeichnet**, daß
- das federnde Element (1) aus einer Klemmhülse (1.3) besteht, dessen vorgespanntes ringförmiges Profil (1.3a) einen rechteckigen Querschnitt aufweist,
- auf dem ringförmigen Profil (1.3a) an den freien Enden (2.5, 2.6) eine Werkzeugaufnahme angeformt ist, die sich aus je einer bogenförmigen Wandung (3.3, 3.4) mit rechtwinklig angesetztem bogenförmigen Dachsegment (8.1, 8.2), welche im definierten Abstand zur Öffnung (2) des ringförmigen Profiles (1.3a) lotrecht auf den freien Enden (2.5, 2.6) sitzt, einstückig zusammensetzt, wobei die beiden freien Enden der Dachsegmente (8.1, 8.2) sich stirnseitig gegenüberstehen und zueinander den Abstand der Öffnung (2) besitzen.

13. Befestigungselement nach Anspruch 12, **dadurch gekennzeichnet**, daß das ringförmige Profil (1.3a) einen gleichbleibenden Querschnitt aufweist.

14. Befestigungselement nach Anspruch 12, **dadurch gekennzeichnet**, daß sich die beiden freien Enden (2.5, 2.6) des Profiles (1.3a) durch Spreizung der beiden bogenförmigen Wandungen (3.3, 3.4) mit einem geeigneten Werkzeug (5.3), dessen Ende zu einem Formteil (9) ausgebildet ist, des sich der bogenförmig gestalteten Öffnung (2) mit definierter Tiefe unterführen läßt und durch Drehung des Werkzeuges (5.3) gegen die bogenförmigen Wandungen (3.3, 3.4) drückt, bewegen lassen, wodurch sich eine Vorspannung des als Klemmhülse (1.3) ausgeführten federnden Elementes (1) einstellt.

15. Befestigungselement nach Anspruch 12, **dadurch gekennzeichnet**, daß nach Beendigung der Spreizung der bogenförmigen Wandungen (3.3, 3.4) und Entnahme des Werkzeuges (5.3) aus der bogenförmig gestalteten Öffnung (2) sich die vorbestimmte Vorspannung auf den Schutzschlauch überträgt.

16. Befestigungselement nach Anspruch 12, **dadurch gekennzeichnet**, daß umfänglich dem ringförmigen Profil (1.3a) eine oder mehrere Sicken (10) eingelassen sind, die axial der Klemmhülse (1.3) liegen, und daß die Tiefe der Sicken (10) einheitlich oder veränderlich ist.

17. Befestigungselementnach Anspruch 16, **dadurch gekennzeichnet**, daß die veränderliche Sicke (10), die gegenüber dem unterhalb der Öffnung (2) befindlichen Bereich des Profiles (1.3a) das infolge der Spreizung mit dem größten Biegemoment beansprucht wird, angeordnet ist, eine maximale Tiefe aufweist.
